# EUROPEAN PATENT APPLICATION

(11) **EP 3 739 478 A1**
(43) Date of publication of application: **18.11.2020**
(21) Application number: 18902591.9
(22) Date of filing: 13.12.2018
(51) Int. Cl.: G06F 17/50, G06T 19/00

(54) **THREE-DIMENSIONAL DRAWING DISPLAY SYSTEM, AND THREE-DIMENSIONAL DRAWING DISPLAY METHOD AND PROGRAM**

(30) Priority: 24.01.2018 JP 2018009691
(71) Applicant: Mitsubishi Shipbuilding Co., Ltd., Yokohama-shi Kanagawa 220-8401 (JP)
(72) Inventor: MIMORI Yuji, Yokohama-shi, Kanagawa 220-8401 (JP); NAKANO Kimitaka, Tokyo 108-0014 (JP)
(74) Representative: Henkel & Partner mbB
(86) International application number: PCT/JP2018/045869
(87) International publication number: WO 2019/146303

(57) **Abstract**

This three-dimensional drawing display system is provided with: a storage unit which stores three-dimensional data of components that constitute a ship, design information on the components, and design information on the ship; and an image generation unit which generates a three-dimensional image in which the ship in which the components are combined on the basis of the design information on the ship, is displayed together with ship hull coordinates.

## Description

### [Technical Field]

The present invention relates to a three-dimensional drawing display system, and three-dimensional display method and program.

Priority is claimed on Japanese Patent Application No. 2018-009691, filed January 24, 2018, the content of which is incorporated herein by reference.

### [Background Art]

Display devices adapted to display three-dimensional shapes of ships have been provided. Typical display devices display shapes of entire ships or shapes of parts of ships in a three-dimensional manner. As related art, Patent Literature 1 includes description about a display device for facilitating management of pipes in a ship. Since this display device displays states of pipes used in the ship and the periphery of attachment positions thereof as a three-dimensional image, a user can easily identify which pipes are provided in which of parts in the ship.

### [Citation List]

### [Patent Literature]

[Patent Literature 1]
Japanese Unexamined Patent Application, First Publication No. 2015-127890

### [Summary of Invention]

### [Technical Problem]

However, typical display devices may not include design information necessary to manufacture ships such as information regarding components, and the information to be displayed as drawings to be used in operations for manufacturing ships may not be insufficient.

The present invention provides a three-dimensional drawing display system, and three-dimensional drawing display method and program capable of solving the aforementioned problems.

### [Solution to Problem]

According to an aspect of the present invention, a three-dimensional drawing display system includes: a storage unit configured to store three-dimensional data of components that configure a ship, design information of the components, and design information of the ship; and an image generation unit configured to generate a three-dimensional image that displays the ship as an assembly of the components based on the design information of the ship along with a ship body coordinate system.

According to an aspect of the present invention, the image generation unit generates a three-dimensional image that displays identification information of each of the components on a side in front.

According to an aspect of the present invention, the image generation unit generates a three-dimensional image of the ship such that display and non-display of the components are switched between depending on types of the components.

According to an aspect of the present invention, the image generation unit generates, on a basis of designation of one unit of operations in processes of manufacturing the ship, a three-dimensional image of part of the ship configured of the components used in the unit of operations.

According to an aspect of the present invention, the image generation unit generates a three-dimensional image that displays the components in different forms in accordance with progress of operations in the processes of manufacturing the ship.

According to an aspect of the present invention, the image generation unit generates, for each operation process configuring the processes of manufacturing the ship, a three-dimensional image that displays the components used in the operation process in different forms.

According to an aspect of the present invention, the image generation unit generates a three-dimensional image that displays, in a first predetermined form, the components assembled in an operation process that has already been completed, displays, in a second predetermined form, the components related to the current operation process, and does not display the components used in the following operation processes, in operation processes of attaching the components in the processes of manufacturing the ship.

According to an aspect of the present invention, the image generation unit generates a three-dimensional image that displays only a group of hull components selected from among the components along with a gravity center position of part or all of the ship configured of the hull components.

According to an aspect of the present invention, the image generation unit generates a three-dimensional image in which a plurality of hull components or a group of hull components to be assembled in a designated assembly operation process in the assembly operation processes of hull components configuring the processes of manufacturing the ship are aligned, and for hull components, the assembly of which has been completed at the time of completion of an assembly operation process previous to the assembly operation process designated in the three-dimensional image, displays a three-dimensional image of a group of hull components after the assembly.

According to an aspect of the present invention, the image generation unit generates a three-dimensional image in which a group of hull components to be assembled as a result of the designated assembly operation process in the assembly operation processes of the hull components configuring the processes of manufacturing the ship is arbitrarily split.

According to an aspect of the present invention, the image generation unit generates a three-dimensional image in which a scaffold is placed inside the ship, on the basis of an instruction from a user.

According to an aspect of the present invention, the image generation unit generates, in a switching manner, an image that displays a three dimensional image related to the ship by applying different colors to sections that are regions defined on the basis of a predetermined design intention and an image that displays a three-dimensional image related to the ship by applying colors that are to be applied when the manufacturing of the ship is completed.

According to an aspect of the present invention, a three-dimensional drawing display method includes: acquiring three-dimensional data of components that configure a ship, design information of the components, and design information of the ship; and generating a three-dimensional image that displays a three-dimensional image of the ship as an assembly of the components on the basis of the design information of the ship along with a ship body coordinate system.

According to an aspect of the present invention, a program causes a computer to function as: means for acquiring three-dimensional data of components that configure a ship, design information of the components, and design information of the ship; and means for generating a three-dimensional image that displays a three-dimensional image of the ship as an assembly of the components on the basis of the design information of the ship along with a ship body coordinate system.

### [Advantageous Effects of Invention]

According to the three-dimensional drawing display system, and the three-dimensional drawing display method and program as described above, it is possible to display various drawings related to manufacturing of a ship in a three-dimensional manner.

### [Brief Description of Drawings]

Fig. 1 is a functional block diagram of a three-dimensional drawing display system according to an embodiment of the present invention.
Fig. 2 is a diagram for explaining an outline of a displayed image according to an embodiment of the present invention.
Fig. 3 is a first diagram illustrating an example of a drawing image for manufacturing a ship according to an embodiment of the present invention.
Fig. 4 is a second diagram illustrating an example of a drawing image for manufacturing a ship according to an embodiment of the present invention.
Fig. 5 is a third diagram illustrating an example of a drawing image for manufacturing a ship according to an embodiment of the present invention.
Fig. 6 is a first diagram illustrating an example of a fitting drawing image according to an embodiment of the present invention.
Fig. 7 is a second diagram illustrating an example of a fitting drawing image according to an embodiment of the present invention.
Fig. 8 is a third diagram illustrating an example of a fitting drawing image according to an embodiment of the present invention.
Fig. 9 is a fourth diagram illustrating an example of a fitting drawing image according to an embodiment of the present invention.
Fig. 10 is a fifth diagram illustrating an example of a fitting drawing image according to an embodiment of the present invention.
Fig. 11 is a sixth diagram illustrating an example of a fitting drawing image according to an embodiment of the present invention.
Fig. 12 is a seventh diagram illustrating an example of a fitting drawing image according to an embodiment of the present invention.
Fig. 13 is an eighth diagram illustrating an example of a fitting drawing image according to an embodiment of the present invention.
Fig. 14 is a ninth diagram illustrating an example of a fitting drawing image according to an embodiment of the present invention.
Fig. 15 is a tenth diagram illustrating an example of a fitting drawing image according to an embodiment of the present invention.
Fig. 16 is an eleventh diagram illustrating an example of a fitting drawing image according to an embodiment of the present invention.
Fig. 17 is a twelfth diagram illustrating an example of a fitting drawing image according to an embodiment of the present invention.
Fig. 18 is a diagram illustrating an example of a production drawing related to a fitting drawing image according to an embodiment of the present invention.
Fig. 19 is a thirteenth diagram illustrating an example of a fitting drawing image according to an embodiment of the present invention.
Fig. 20 is a fourteenth diagram illustrating an example of a fitting drawing image according to an embodiment of the present invention.
Fig. 21 is a fifteenth diagram illustrating an example of a fitting drawing image according to an embodiment of the present invention.
Fig. 22 is a sixteenth diagram illustrating an example of a fitting drawing image according to an embodiment of the present invention.
Fig. 23 is a seventeenth diagram illustrating an example of a fitting drawing image according to an embodiment of the present invention.
Fig. 24 is an eighteenth diagram illustrating an example of a fitting drawing image according to an embodiment of the present invention.
Fig. 25 is a nineteenth diagram illustrating an example of a fitting drawing image according to an embodiment of the present invention.
Fig. 26 is a twentieth diagram illustrating an example of a fitting drawing image according to an embodiment of the present invention.
Fig. 27 is a first diagram illustrating an example of a hull drawing image according to an embodiment of the present invention.
Fig. 28 is a second diagram illustrating an example of a hull drawing image according to an embodiment of the present invention.
Fig. 29 is a third diagram illustrating an example of a hull drawing image according to an embodiment of the present invention.
Fig. 30 is a fourth diagram illustrating an example of a hull drawing image according to an embodiment of the present invention.
Fig. 31 is a fifth diagram illustrating an example of a hull drawing image according to an embodiment of the present invention.
Fig. 32 is a sixth diagram illustrating an example of a hull drawing image according to an embodiment of the present invention.
Fig. 33 is a seventh diagram illustrating an example of a hull drawing image according to an embodiment of the present invention.
Fig. 34 is an eighth diagram illustrating an example of a hull drawing image according to an embodiment of the present invention.
Fig. 35 is a ninth diagram illustrating an example of a hull drawing image according to an embodiment of the present invention.
Fig. 36 is a tenth diagram illustrating an example of a hull drawing image according to an embodiment of the present invention.
Fig. 37 is a first diagram illustrating an example of a scaffold drawing image according to an embodiment of the present invention.
Fig. 38 is a second diagram illustrating an example of a scaffold drawing image according to an embodiment of the present invention.
Fig. 39 is a first diagram illustrating an example of a painting drawing image according to an embodiment of the present invention.
Fig. 40 is a second diagram illustrating an example of a painting drawing image according to an embodiment of the present invention.
Fig. 41 is a diagram illustrating an example of a painting setting table according to an embodiment of the present invention.
Fig. 42 is a diagram illustrating an example of a hardware configuration of a three-dimensional drawing display system according to an embodiment of the present invention.

### [Description of Embodiments]

### <Embodiments>

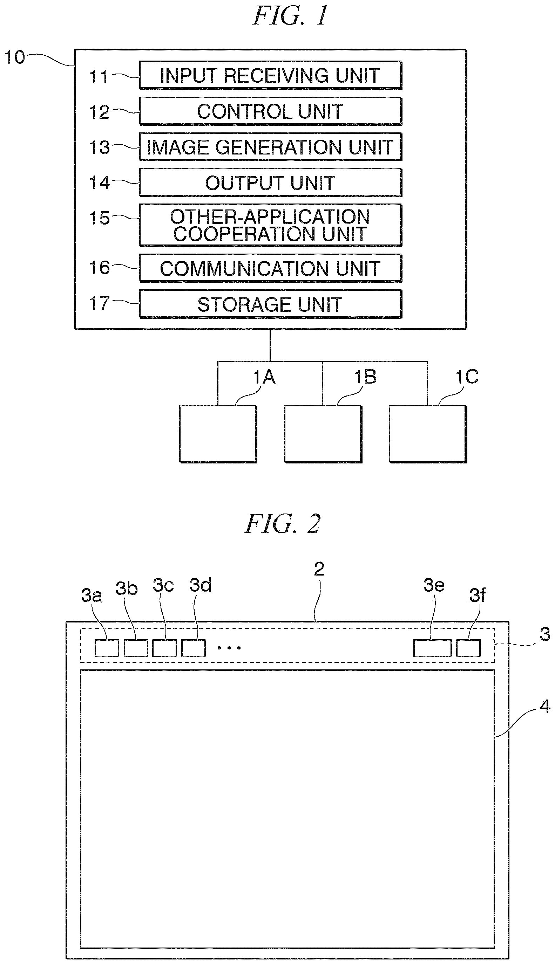

Hereinafter, a three-dimensional drawing display system according to a first embodiment of the present invention will be described with reference to Figs. 1 to 42. Fig. 1 is a functional block diagram of the three-dimensional drawing display system according to the embodiment of the present invention.

A three-dimensional drawing display system 10 illustrated in Fig. 1 is a display device that is configured of a computer such as a server device and is adapted to display a three-dimensional image of a ship. The three-dimensional drawing display system 10 includes a function of expressing information that drawings for manufacturing a ship (a drawing for manufacturing a ship, a fitting drawing, a hull drawing, a scaffold drawing, a painting drawing, and the like) have in a three-dimensional manner, unlike a typical display device. The three-dimensional drawing display system 10 includes a function of visualizing a degree of completion of a ship structure, an attachment state of outfitting parts, and the like by reflecting progress states of operation processes in processes of manufacturing a ship. The three-dimensional drawing display system 10 is connected to terminal devices 1A to 1C configured of personal computers (PCs) via a network or the like. A user such as a designer who is in charge of operations of manufacturing a ship, and a worker for assembling the ship inputs instruction information using the terminal device 1A or the like. Once the three-dimensional drawing display system 10 acquires the instruction information, the three-dimensional drawing display system 10 generates a three-dimensional image including information of various drawings used in operations of manufacturing a ship in accordance with the instruction information. The three-dimensional drawing display system 10 transmits the generated image to the terminal device 1A or the like from which the instruction input has been received.

As illustrated in Fig. 1, the three-dimensional drawing display system 10 includes an input receiving unit 11, a control unit 12, an image generation unit 13, an output unit 14, an other-application cooperation unit 15, a communication unit 16, and a storage unit 17.

The input receiving unit 11 acquires the instruction information that the user inputs to the terminal device 1A or the like. The instruction information is, for example, an instruction for displaying a ship body in a rotated manner, a request for displaying a sectional view at a certain position, or the like.

The control unit 12 selects information necessary to generate a three-dimensional image that the user desires and provides an instruction for generating an image, on the basis of the instruction information acquired by the input receiving unit 11.

The image generation unit 13 generates a three-dimensional image that displays the shape and design information of part or all of the ship, on the basis of an instruction from the control unit 12.

The output unit 14 outputs the image generated by the image generation unit 13 to a display, a network interface, or the like. For example, the output unit 14 outputs a three-dimensional image to the terminal device 1A or the like via the communication unit 16.

The other-application cooperation unit 15 cooperates with other applications.

The communication unit 16 performs communication with other devices such as the terminal devices 1A to 1C.

The storage unit 17 stores various kinds of information necessary to generate a three-dimensional image of a ship.

For example, the storage unit 17 stores three-dimensional CAD data of design drawings related to structures of each part and the entirety of the ship. The storage unit 17 stores three-dimensional data and design information related to structures of outfitting partssuch as pipes, valves, and compressors. Hereinafter, the outfitting parts may simply be described as components. The design information includes materials and weights of components, colors in a case of painting being applied, names, IDs (management numbers), flag information indicating whether the components are special components, whether or not heat insulating materials are needed, thicknesses of heat insulating materials when needed, and the like. The storage unit 17 stores information indicating which part of the ship each component configures, what kind of means is to be used to couple each component with which of other components, and the like. For example, the storage unit 17 stores a table or the like in which position information of three-dimensional CAD data related to the structure of the ship and IDs of the components are associated. For example, the storage unit 17 stores IDs or the like of components used in each operation process in operations of manufacturing the ship.

The storage unit 17 stores three-dimensional CAD data of hull components and information that defines how to assemble the hull components. The storage unit 17 stores a conversion table between an XYZ coordinate system and a ship body coordinate system.

Fig. 2 illustrates an example of a user interface image (image 2) generated by the image generation unit 13.

Fig. 2 is a diagram for explaining an outline of a displayed image according to an embodiment of the present invention.

The image 2 includes an instruction information input region 3 and a three-dimensional image display region 4. In the instruction information input region 3, instruction buttons 3a to 3d, an input section 3e, a search button 3f, and the like are displayed. The user inputs an ID of the ship, for example, to the input section 3e in the image 2 displayed on the display of the terminal device 1A and presses the search button 3f. Then, the input receiving unit 11 acquires the ID, the control unit 12 searches in the storage unit 17, reads three-dimensional CAD data indicating an entire image of the ship that has the corresponding ID, and provides, to the image generation unit 13, an instruction for generating a three-dimensional image of the ship when seen in a predetermined direction from a predetermined viewpoint position. Then, the image generation unit 13 generates a three-dimensional image using three-dimensional CAD data selected by the control unit 12. The output unit 14 transmits the three-dimensional image of the ship to the terminal device 1A via the communication unit 16. Through such processing, the user acquires the three-dimensional image of the ship with the ID that the user has inputted.

Hereinafter, an image generated by the three-dimensional drawing display system 10 will be described as an example. The three-dimensional drawing display system 10 may be simply described as a "display system 10".

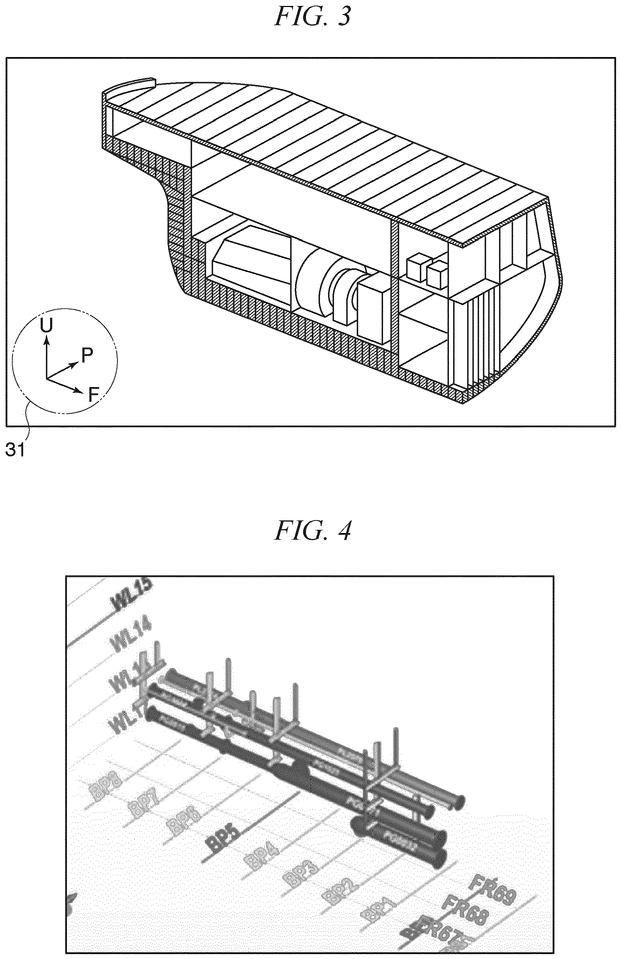

Fig. 3 is a first diagram illustrating an example of a drawing image for manufacturing a ship according to an embodiment of the present invention.

A three-dimensional sectional view of the ship clip-displayed at a position in Fig. 3 is illustrated. On the lower left side in Fig. 3, signs (F, P, and U) representing a ship body coordinate system are displayed. Typically, operations are performed using ship body coordinates instead of XYZ coordinates in a site of manufacturing a ship. Therefore, a three-dimensional image is preferably displayed in a ship body coordinate system in order for the three-dimensional image to play a role as a drawing for manufacturing a ship. Here, F (FORE) is a bow direction, P (PORT) is a left direction in a case of facing the bow direction, and U (UPPER) is an upward direction. The direction opposite to F is displayed as A (AFT), the direction opposite to P is displayed as S STARBOARD), and the direction opposite to U is displayed as L (LOWER). Alternatively, the ship body coordinates are also displayed using FR, BL, and WL.

In a case in which the user desires to refer to a section of a ship displayed in the three-dimensional image display region 4 in the interface image 2, for example, the user selects a coordinate position in the ship body coordinate system and presses a button (for example, the instruction button 3a) for providing an instruction for displaying a sectional image. Then, the control unit 12 provides, to the image generation unit 13, an instruction for generating a sectional image at the coordinate position on the basis of the coordinate information selected by the user. The image generation unit 13 generates a sectional image illustrated as an example in Fig. 3. Since the user can designate a position and a direction (posture) of the ship in the three-dimensional image using the coordinate system that the user usually uses, it is possible to handle them with the same intuition as that in a site.

When three-dimensional display is rotated and moved, display restrictions in the ship body coordinate system may be implemented. In a case in which rotation is limited, the rotation may be limited to rotation about a U axis.

Fig. 4 is a second diagram illustrating an example of a drawing image for manufacturing a ship according to an embodiment of the present invention.

Fig. 4 illustrates a display example in a case in which a hull is displayed in a semi-transparent manner, ducts and cable tray are not displayed, and further, coordinate information in the ship body coordinate system is displayed. For example, the user selects a hull displayed in the three-dimensional image display region 4, presses an instruction button for providing an instruction for semi-transparency or the like, and inputs an instruction for displaying the hull in a semi-transparent manner and not displaying the duct and the electric path. Then, the control unit 12 provides an instruction for displaying the hull in a semi-transparent manner and not displaying the duct and the electric path on the basis of the instruction, and the image generation unit 13 generates a three-dimensional image as illustrated as an example in Fig. 4 in which only pipes are displayed. For example, the user presses an instruction button (for example, the instruction button 3b) for providing an instruction for displaying the ship body coordinates. Then, the control unit 12 calculates the coordinates using the ship body coordinates on the basis of conversion table between three-dimensional XYZ coordinate information and the ship body coordinate system stored in the storage unit 17, for example, and the image generation unit 13 generates an image that displays reference lines indicating positions in the ship body coordinate coordinates as illustrated as an example in Fig. 4. Here, the ship body coordinates "BPx (x is an integer)" represents the position in a ship width direction on the left side of the ship body, and the value increases to "BP2" and "BP3" toward the left with reference to a certain position. "FRx (x is an integer)" represents the position of the ship body in the front-back direction. "WLx (x is an integer)" represents the height from the ship bottom. In this manner, the user can extract only components that the user himself/herself desires to refer to and causes the components to be displayed along with the reference lines at positions represented in the ship body coordinate system.

For example, if a hull component name, a pipe ID, or the like is input to the input section 3e, and a predetermined instruction button is pressed, then the designated component may be displayed in an emphasized manner. The ID or the like of the component may be configured to be read by a barcode reader and be input to the input section 3e.

Once the user selects the component and presses the instruction button 3c, for example, the image generation unit 13 may display a list of items of design information of the component.

According to this embodiment, the operator can obtain design information, which the operator typically acquires from a two-dimensional drawing for manufacturing a ship, from a three-dimensional image. It is possible to extract and display only information that the operator desires to ascertain. In this manner, it is possible for the operator to more easily and accurately recognize spatial positional relationships between components and operation locations as targets, thereby to reduce an operation load, and to improve operation efficiency.

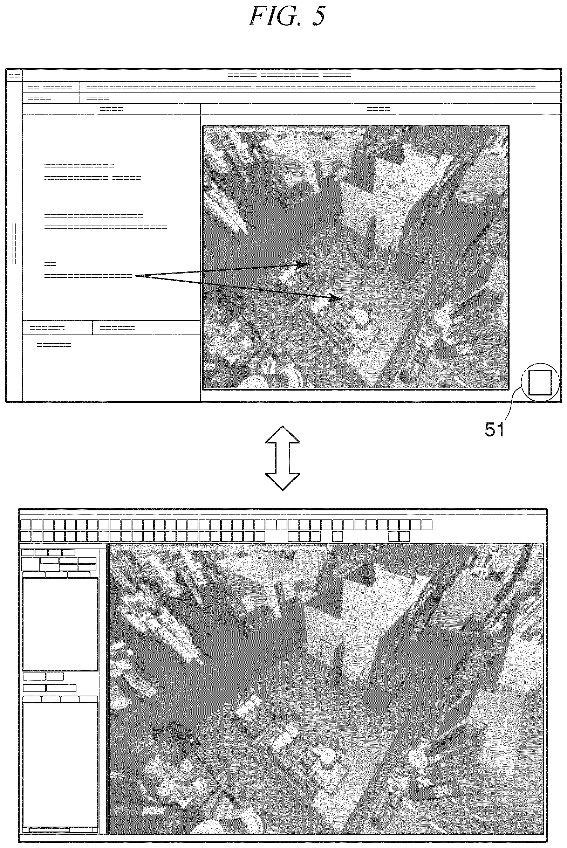

Fig. 5 is a third diagram illustrating an example of a drawing image for manufacturing a ship according to an embodiment of the present invention.

The upper diagram in Fig. 5 is an example of a screen in which an image generated by the image generation unit 13 is attached to spreadsheet software. As described above in Figs. 3 and 4, the operator can cause the display system 10 to generate an image necessary for his/her own operations. Once the necessary three-dimensional image is generated, the operator presses an instruction button for providing an instruction for outputting the three-dimensional image to other applications. Then, the other-application cooperation unit 15 generates the image and information that integrates information necessary to generate the image, for example, an ID of the ship, an ID of a component to be displayed, a viewpoint position and a viewing direction of the three-dimensional image, whether or not there is a display of reference lines for ship body coordinates, and the like. Once the operator performs an attaching operation on the spreadsheet software or the like, an object (3D button 51) in which the image generated by the other-application cooperation unit 15 and the information necessary to generate the image are linked is attached to the spreadsheet software or the like. On the spreadsheet software or the like, the image and the 3D button 51 are displayed. Then, once the user presses the 3D button 51, the interface image 2 generated by the display system 10 is activated. The control unit 12 acquires information necessary to generate the image transmitted through the pressing of the 3D button 51 and provides an instruction for generating the image to the image generation unit 13. The lower diagram in Fig. 5 illustrates an example of the generated image. By reproducing the image attached to the spreadsheet software in the display system 10, the user can generate the image again in a case of viewing the attached image from another angle by changing the viewpoint or can generate a surrounding image by changing the viewing direction. This function can be used as a communication tool among a plurality of users. For example, a user A may generate an image related to a certain component, perform an attachment, and write a comment or the like in the spreadsheet software. Then, another user B can share the information. An image may be attached to a written operation instruction created by the spreadsheet software or the like. The user can check various operations before performing actual operations by activating the display system 10 from the written operation instruction and causing the three-dimensional image to be displayed.

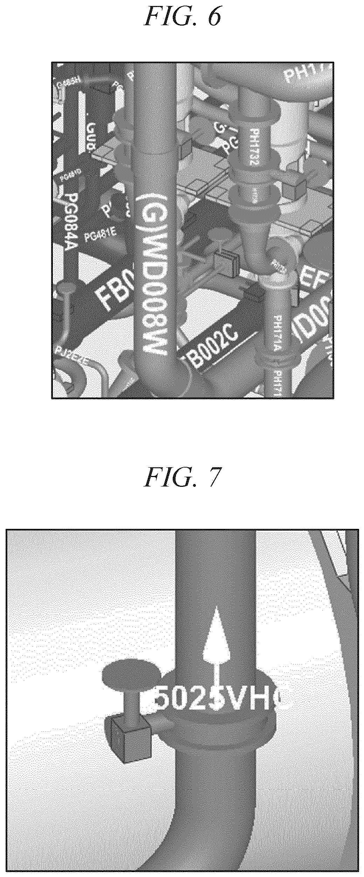

Fig. 6 is a first diagram illustrating an example of a fitting drawing image according to an embodiment of the present invention.

Fig. 6 illustrates an example in which pipe numbers and finishing signs are displayed in a pipe three-dimensional image. The control unit 12 reads the pipe numbers and the finishing signs from the pipe design information along with pipe structure information stored in the storage unit 17. The image generation unit 13 generates an image that displays the numbers and the finishing signs on the sides in front of the pipe images. Here, even if the user changes the viewpoint position or the viewing direction, the image generation unit 13 still generates an image that displays pipe numbers and the finishing marks on the side in front of the pipe images. In other words, the user can always visually recognize the pipe numbers and the finishing signs.

The pipe numbers and the finishing signs may be displayed by pressing one predetermined instruction button such as the instruction button 3a.

Fig. 7 is a second diagram illustrating an example of a fitting drawing image according to an embodiment of the present invention.

Fig. 7 illustrates an example in which a valve ID and a fluid flowing direction are displayed in a valve three-dimensional image. The control unit 12 reads vector information indicating the valve ID and the fluid flowing direction from valve design information along with valve structure information stored in the storage unit 17. The image generation unit 13 generates an image that displays the ID and the flowing direction on the side in front of the valve image. Here, even if the user changes the viewing direction, the image generation unit 13 still generates an image that displays the ID and the flowing direction on the side in front of the valve image. In other words, the user can always visually recognize the valve information and the flowing direction.

The valve and the flowing direction may be displayed by pressing one predetermined instruction button such as the instruction button 3a.

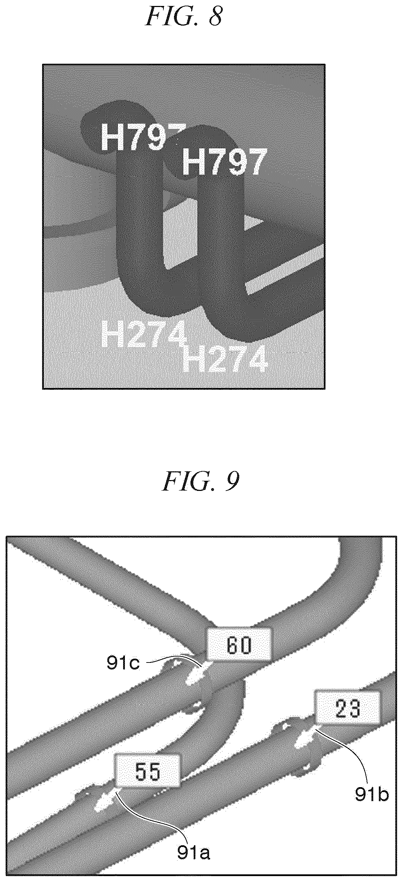

Fig. 8 is a third diagram illustrating an example of a fitting drawing image according to an embodiment of the present invention.

Fig. 8 illustrates an example in which a relative height from a deck at a position to which a pipe is attached is displayed in a pipe three-dimensional image. The control unit 12 reads pipe installation heights H274 and H797 from the pipe design information along with the pipe structure information stored in the storage unit 17. H274 and H797 mean that the heights are 274 mm and 797 mm from the deck, respectively. The image generation unit 13 generates an image that displays H274 and H797 on the side in front of the pipe image. Here, even if the user changes the viewing direction, the image generation unit 13 still generates an image that displays H274 and H797 on the side in front of the valve image. In this manner, the user can always recognize the relative heights of the pipes. Display of the relative heights of the pipes and display of the numbers and the finishing signs (Fig. 6) may be switched between by pressing one predetermined instruction button such as the instruction button 3a.

Fig. 9 is a fourth diagram illustrating an example of a fitting drawing image according to an embodiment of the present invention.

Fig. 9 illustrates an example of joint displays 91a to 91c that represent joints at pipe joint portions and management numbers of the joints. Specifically, the joints illustrated in Fig. 9 are welding, the management number of the welding represented by the joint display 91a is 55, the management number of the welding represented by the joint display 91b is 23, and the management number of the welding represented by the joint display 91c is 60. The storage unit 17 records that two pipes are joined through welding and management numbers thereof in an associated manner with the two pipes to be joined through the welding, for example. The control unit 12 reads this information from the storage unit 17, and the image generation unit 13 generates an image that displays the joint display 91a and the like at the joint portion of the two pipes and displays the management numbers on the side in front of the image. Although it is often difficult to find actual pipe welding locations, the operator can easily find the welding locations and management numbers thereof through such display.

The display of the joint locations and the management numbers may be displayed by pressing one predetermined instruction button such as the instruction button 3a.

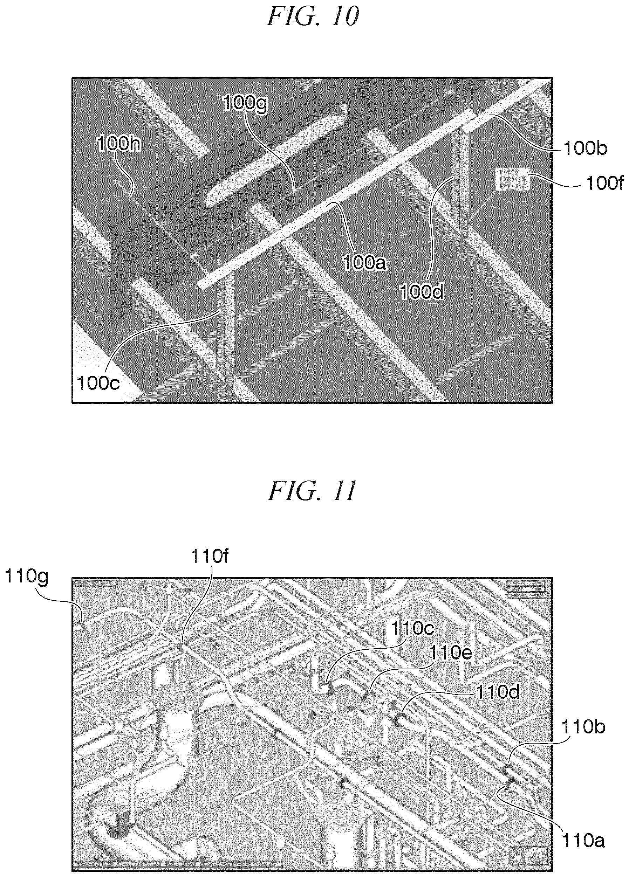

Fig. 10 is a fifth diagram illustrating an example of a fitting drawing image according to an embodiment of the present invention.

Fig. 10 illustrates an example of component numbers, component dimensions, and attachment dimensions of support materials 100a to 100d for attaching components such as pipes. A component number is displayed with a leading line 100f. A component dimension is displayed with a dimension line 100g while an attachment dimension is displayed with a dimension line 100h. The information is recorded in the storage unit 17 in an associated manner with pipes or the like to which the support materials 100a to 100d are attached, for example. The control unit 12 reads this information from the storage unit 17, and the image generation unit 13 generates an image that displays the support materials at appropriate positions along with the component dimensions, the attachment dimensions, and the like. Through such display, the operator can easily install the support materials. The display of the support materials may be performed by pressing one predetermined instruction button such as the instruction button 3a.

Fig. 11 is a sixth diagram illustrating an example of a fitting drawing image according to an embodiment of the present invention.

Fig. 11 illustrates an example in which special gaskets 110a to 110g are displayed in an emphasized manner. The storage unit 17 records attachment positions of the special gaskets in an associated manner with pipe information. The control unit 12 reads this information from the storage unit 17, and the image generation unit 13 generates an image that displays the special gaskets 110a to 110g in an emphasized manner. In a case in which special gaskets of different types are attached, the special gaskets may be displayed with different colors. Through such display, it is possible to prevent an error that the operator attaches a general gasket to a place where a special gasket is to be attached.

The emphasized display of the special gaskets may be performed by pressing one predetermined instruction button such as the instruction button 3a.

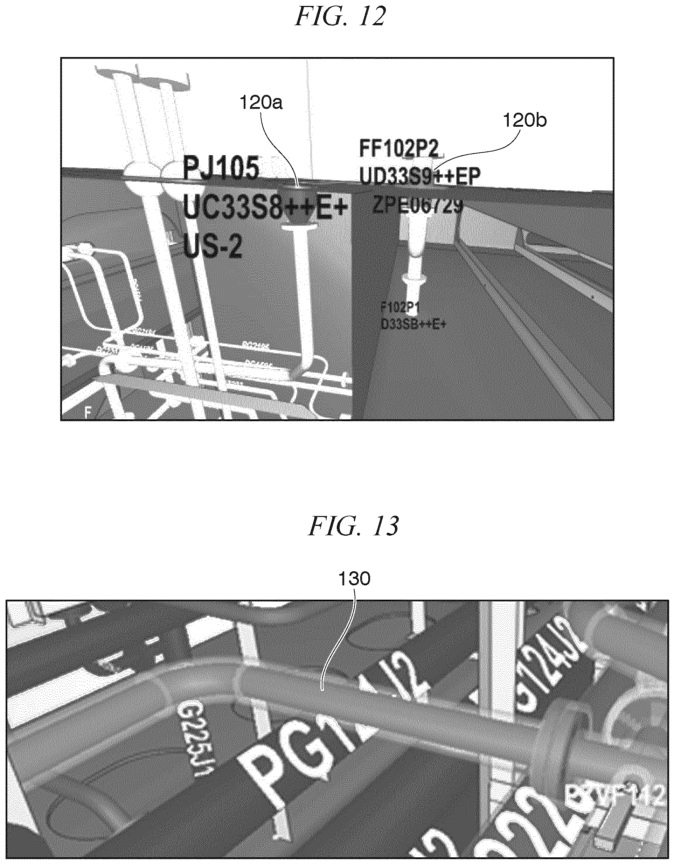

Fig. 12 is a seventh diagram illustrating an example of a fitting drawing image according to an embodiment of the present invention.

Fig. 12 illustrates an example in which information such as system numbers, pallets, and arrangement numbers are displayed in an emphasized manner in a three-dimensional image of penetrating pieces/sleeves. The storage unit 17 records design information such as system numbers for each of the penetrating pieces/sleeves. The control unit 12 reads this information from the storage unit 17, and the image generation unit 13 generates an image that displays the penetrating pieces/sleeves 120a and 120b in an emphasized manner and displays system numbers and the like on the side in front.

The emphasized display of the penetrating pieces/sleeves may be performed by pressing one predetermined instruction button such as the instruction button 3a.

By displaying only specific components in an emphasized manner as in Figs. 11 and 12, the operator can find a target at a first sight, operation errors are prevented, and convenience is thus improved.

Fig. 13 is an eighth diagram illustrating an example of a fitting drawing image according to an embodiment of the present invention.

Fig. 13 illustrates an example in which heat insulating materials for pipes and ducts are displayed in a semi-transparent manner. The storage unit 17 records whether or not heat insulating materials are needed according to design information of pipes and duct, and in a case in which heat insulation is needed, the thicknesses of the heat insulating materials, the control unit 12 reads this information from the storage unit 17, and the image generation unit 13 displays the heat insulating materials 130 with the thicknesses recorded in the storage unit 17 in the periphery of the pipes and the ducts in a semi-transparent manner in a case in which heat insulation is needed.

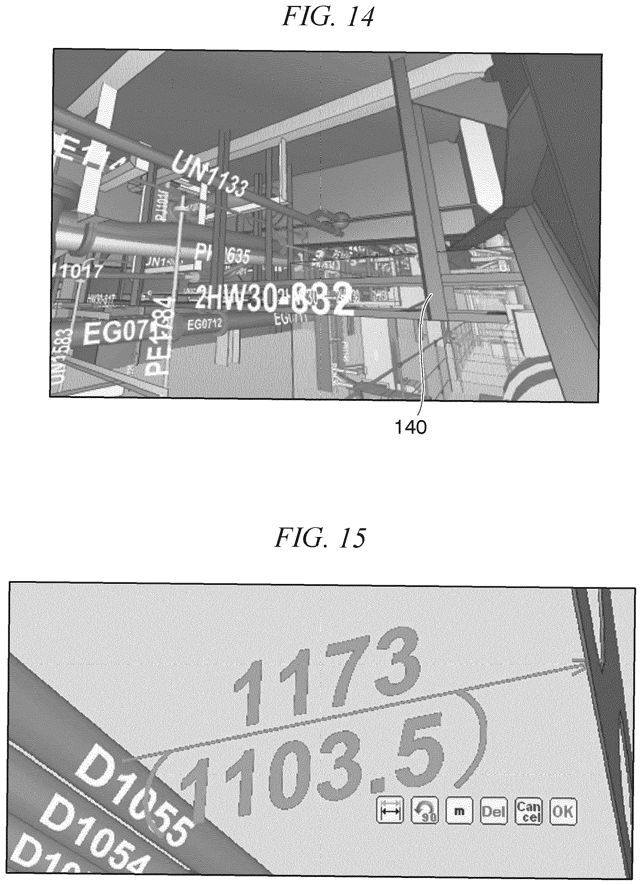

Fig. 14 is a ninth diagram illustrating an example of a fitting drawing image according to an embodiment of the present invention.

Fig. 14 illustrates a display example of electric cables and a member (electric path) in which electric cables are stored. The storage unit 17 records design information such as names, management numbers, and the like in an associated manner with information of the electric path. The control unit 12 reads this information from the storage unit 17, and the image generation unit 13 generates an image that displays management information such as 2HW30832 on the side in front of the electric path image. Here, even if the user changes the viewing direction or the like, the image generation unit 13 generates an image that displays 2HW30832 on the side in front of the electric path image. In this manner, the user can always recognize the management information of the electric path.

Fig. 15 is a tenth diagram illustrating an example of a fitting drawing image according to an embodiment of the present invention.

Figs. 15 illustrates a display example of distances between outfitting parts and between outfitting parts and hull structures. The control unit 12 reads coordinate information of two components and a hull structure from the storage unit 17 and calculates distances between the coordinates. For the distance between the two components, for example, the control unit 12 calculates the shortest distance between the components and the distance between the centers of the components. The image generation unit 13 generates an image that displays the shortest distance and the distance between the centers on the side in front. In the example in Fig. 15, 1173 is the shortest distance, and 1103.5 displayed inside a bracket is the distance between the centers. The distance between the components may be displayed by pressing one predetermined instruction button such as the predetermined button 3a.

According to the fitting drawing images illustrated as examples in Figs. 6 to 15, the operator can acquire design information from the three-dimensional drawings, and it thus becomes easier to check and manage the shapes and the dispositions of the components, and it is possible to reduce the number of processes for reading the drawings. It is possible to prevent forgetting to attach or erroneously attaching components (outfitting parts).

In Figs. 6 to 15, functions related to display of the design information of the outfitting parts have been described. Next, other functions that are advantageous for an operator at a site of manufacturing a ship that a fitting drawing image according to this embodiment provides will be described.

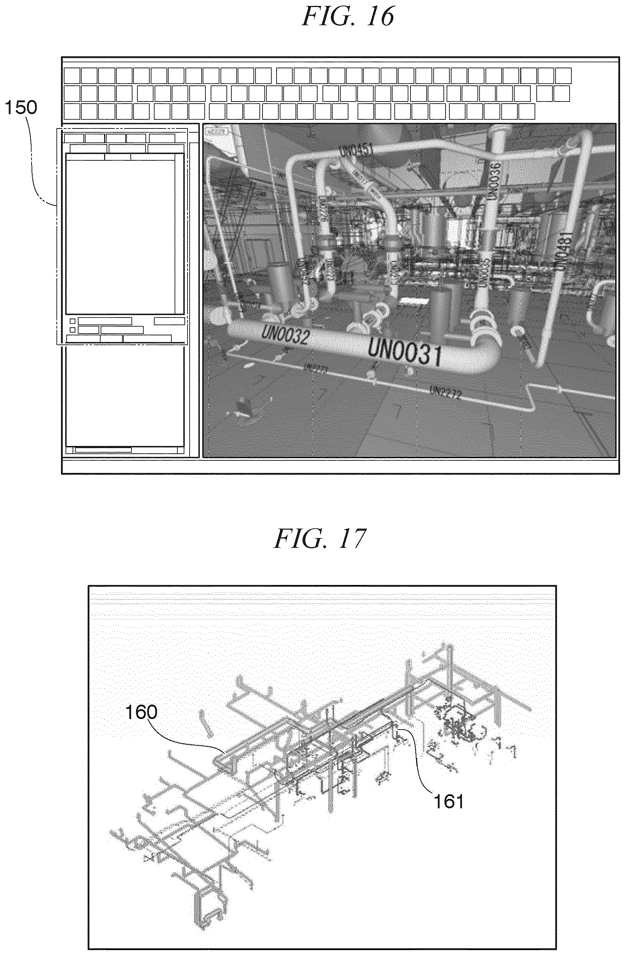

Fig. 16 is an eleventh diagram illustrating an example of a fitting drawing image according to an embodiment of the present invention.

Fig. 16 illustrates a display example of list display (region 150) of pallets and units and components in relation to a pallet selected from the list. In an actual operation, the components are housed in a pallet or a unit and are carried to the site, and attachment operations are then performed. The pallet or the unit is one operation unit (attachment unit). List of pallets or units is displayed in the region 150, and if the user selects any from the list, components that are operation targets in the selected unit or the like are displayed in an emphasized manner such as display with a color that is different from the other components, for example. Through this display, the operator can recognize operation targets and attachment positions once the operator selects the pallet that the operator works on.

The storage unit 17 records pallets or the like in an associated manner with the components, and the control unit 12 selects components linked to a selected pallet once the operator selects the pallet or the like. The image generation unit 13 displays the selected components with a predetermined color.

Fig. 17 is a twelfth diagram illustrating an example of a fitting drawing image according to an embodiment of the present invention.

Fig. 17 illustrates a display example in which pipes, ducts, electric paths, and the like are displayed with colors changed for each of systems.

For example, a system 160 is an oil pipeline system and is displayed with a green color while a system 161 is a sewage system and is displayed with a blue color. Design information of pipes configuring each system includes information indicating which system the pipes belong to, and the image generation unit 13 displays the systems with colors on the basis of this information. The operator can easily distinguish the systems of pipes, ducts, electric paths, and the like.

For example, a list of IDs of pipes, ducts, electric paths, and the like of each system is listed, and only systems selected by the operator from the list may be displayed.

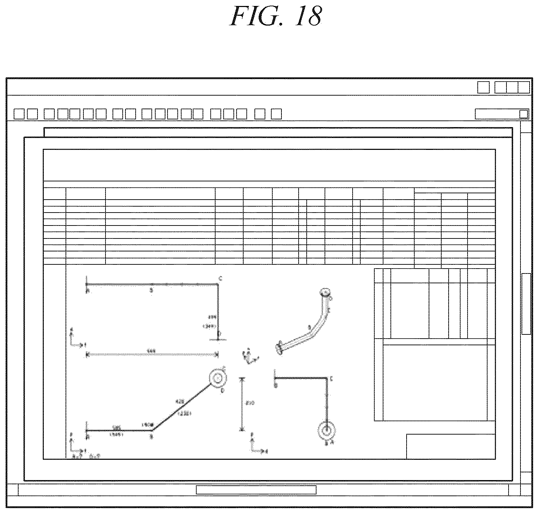

Fig. 18 is a diagram illustrating an example of a production drawing related to a fitting drawing image according to an embodiment of the present invention.

The storage unit 17 records a production drawing of components in an associated manner with the components. Once the user selects a certain pipe from the pipes, ducts, electric paths, and the like and presses one predetermined instruction button such as the instruction button 3a, for example, the production drawing (Fig. 18) of the pipe may be displayed. Details of the operations of manufacturing a ship are often managed using a production drawing. Since the operator can easily refer to the production drawing from the three-dimensional image, convenience is improved.

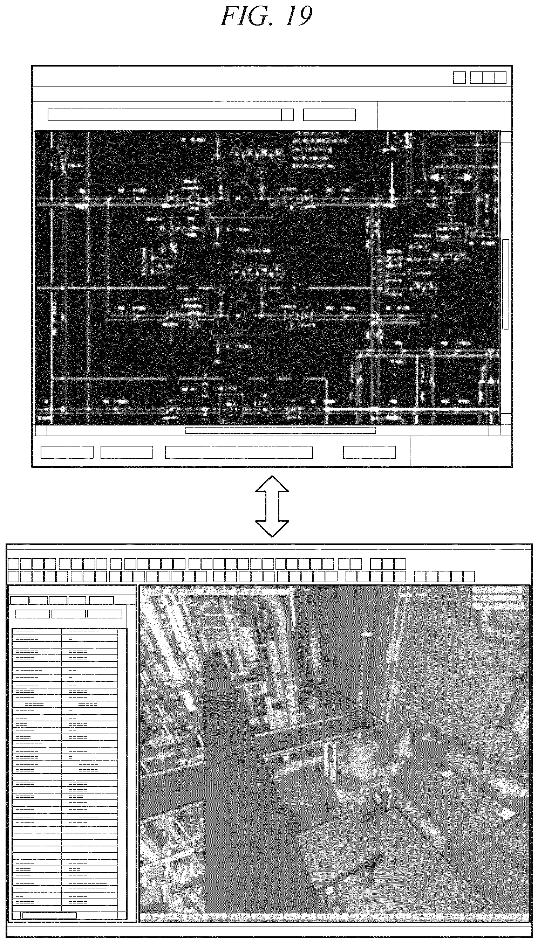

Fig. 19 is a thirteenth diagram illustrating an example of a fitting drawing image according to an embodiment of the present invention.

Fig. 19 illustrates an example in which a valve or the like designated in a system diagram is displayed in an emphasized manner on a three-dimensional image. The left diagram in Fig. 19 is a system diagram. The system diagram may be displayed by the display system 10 or may be cooperated by another system diagram display application. In a case in which an operation is performed on a certain valve, for example, using only the system diagram can allow the operator to know the front-back connection of the valve. However, it is not possible to recognize how the valve attachment position is like, the shape of the valve, and the like therefrom. According to a function of linking to the system diagram, a target location is searched in the system diagram, and if the target location is found, then the operator can obtain information that cannot be known only from the system diagram by referring to the three-dimensional image.

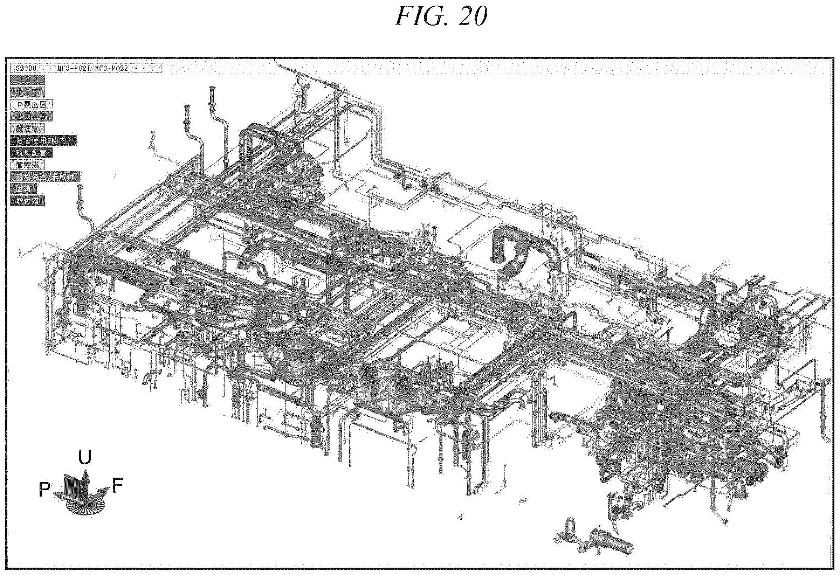

Fig. 20 is a fourteenth diagram illustrating an example of a fitting drawing image according to an embodiment of the present invention.

Fig. 20 illustrates a display example in which operation progresses of pipes, support materials, ducts, and electric paths are displayed with different colors.

Once attachment of a valve or a pipe is completed, for example, the operator selects the pipe or the like that the operator has attached from the three-dimensional image illustrated as an example in Fig. 20 and performs a clicking operation or the like. Then, the control unit 12 updates an operation status flag to "operation completed" in an associated manner with the selected pipe or valve. The image generation unit 13 displays the selected pipe or the like with a gray color, for example. For example, the image generation unit may display a component with a yellow color once creation of a drawing is completed, may display the component with a green color once the component is completed, and may display the component with a blue color if shipping of the component is completed. The manager of the operation progresses can recognize the operation progresses at a first sight.

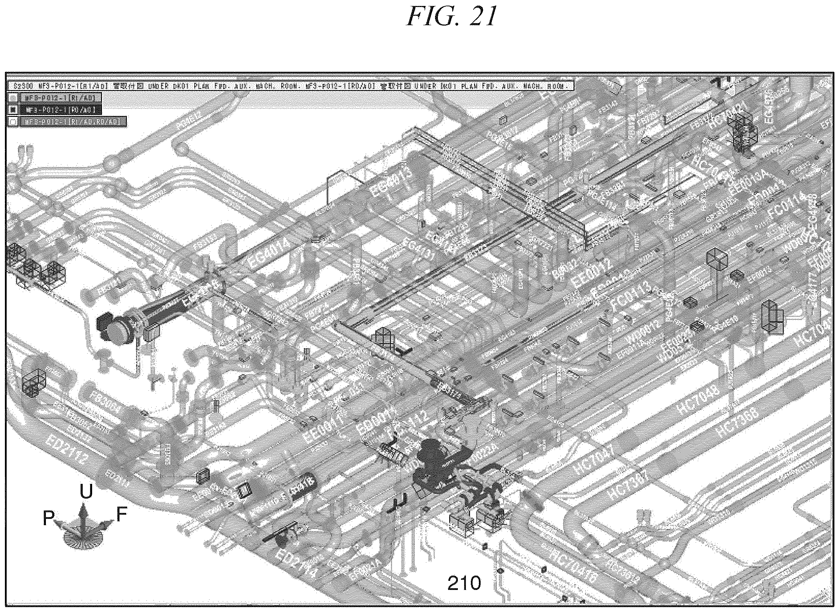

Fig. 21 is a fifteenth diagram illustrating an example of a fitting drawing image according to an embodiment of the present invention.

Fig. 21 illustrates a display example of a changed location in a three-dimensional fitting drawing image of a different version. Fig. 21 illustrates, with different colors, a difference between two different versions of an image that is illustrated as an example in Fig. 20 and that displays progress states. The control unit 12 compares progress states at the same location in the two images and calculates a portion with a difference therebetween. The image generation unit 13 displays a location with a difference by applying a color (for example, the changed location 210). In this manner, the manager can recognize the operation progresses in an arbitrary period.

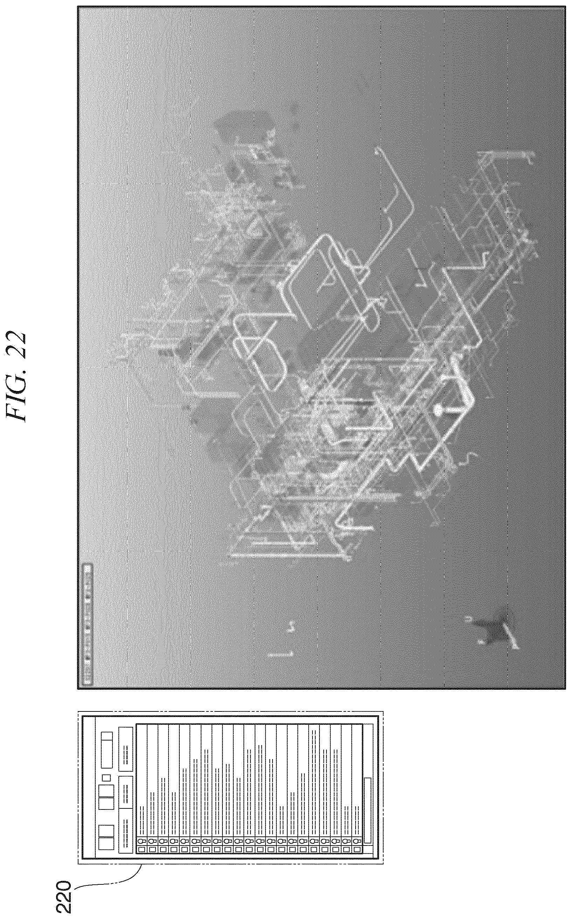

Fig. 22 is a sixteenth diagram illustrating an example of a fitting drawing image according to an embodiment of the present invention.

Fig. 22 illustrates an example of an image in which systems needed for an operation event are displayed with different colors. The operation event is, for example, a test execution date of a certain fitting article. If an activation date of a compressor has been defined, for example, systems necessary to activate the compressor has to be completed until the date. The storage unit 17 records an operation event and a date thereof in advance in an associated manner with each component configuring a system, and once the operator selects one operation event form an event list 220, the image generation unit 13 displays the system associated with the operation event with a predetermined color. In this manner, the user can recognize which system has to be finished early.

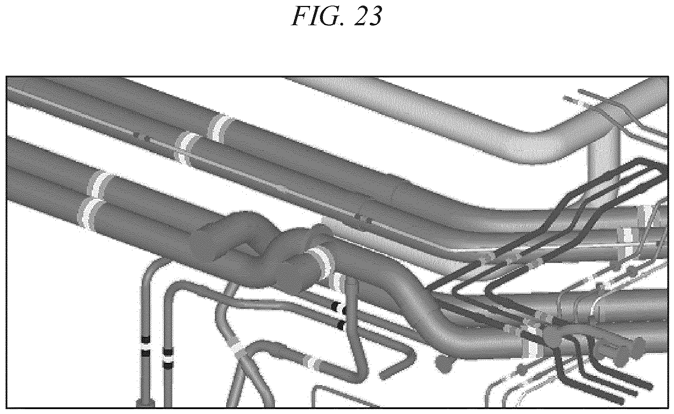

Fig. 23 is a seventeenth diagram illustrating an example of a fitting drawing image according to an embodiment of the present invention.

Fig. 23 illustrates a display example of a sticker that is to be attached to a pipe and indicates a system. Once the operator presses one predetermined instruction button such as the instruction button 3a, the image generation unit 13 generates a three-dimensional image of the pipe to which a sticker with a color in accordance with each system has been attached. In a case in which a practice of attaching a sticker with a color of each system to a pipe on which painting has been completed is employed, the operator who performs the operation of attaching the sticker can efficiently perform the operation of attaching the sticker while viewing the three-dimensional image.

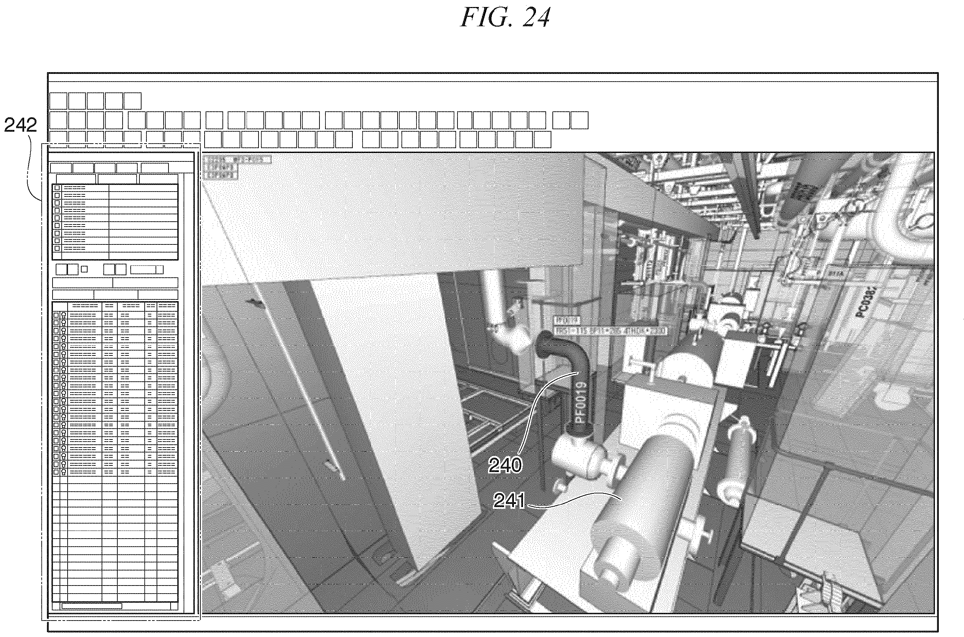

Next, fitting drawings related to creation of an intermediate product are illustrated as examples in Figs. 24 to 26.

Fig. 24 is an eighteenth diagram illustrating an example of a fitting drawing image according to an embodiment of the present invention.

Fig. 24 illustrates a display example of a three-dimensional image in which components to be attached in each operation process are displayed with different colors. The storage unit 17 records relationships between components and operation processes in which the components are to be attached and relationships between pallets and components that are to be handled in the pallets, for example. Once the user selects an operation process and a pallet from a region 242 in which a list of pallets/units for each of the operation processes is displayed, the image generation unit 13 generates a three-dimensional image that displays a component (for example, a fitting article 240) related to the selected pallet with a red color, displays a component (for example, a fitting article 241) that is to be assembled in a process previous to the selected operation process with a white color, and does not display a component that is to be attached in the following processes, for example.

Once the operator attaches the fitting article 240, for example, the operator selects the corresponding component on the three-dimensional image through a clicking operation or the like and then presses one predetermined instruction button such as the instruction button 3a. The input receiving unit 11 receives this operation, and the control unit 12 updates an operation status flag of the fitting article 240 to "operation completed".

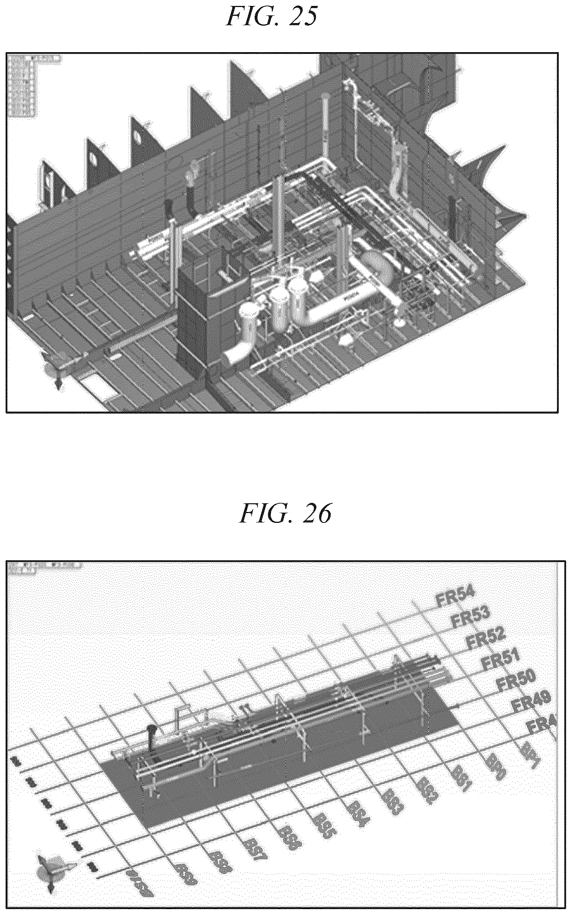

Fig. 25 is a nineteenth diagram illustrating an example of a fitting drawing image according to an embodiment of the present invention.

Fig. 25 is a three-dimensional image of a hull block in a certain operation process (land prefabrication of block outfitting). In the storage unit 17, flag information indicating whether or not the up-down direction is to be reversed is set for each operation process. The control unit 12 determines which of upside-up and upside-down is to be set on the basis of the flag information, and the image generation unit 13 generates a three-dimensional image in accordance with this determination. Fig. 25 displays a land fitting operation state in an operation stage "land fitting". The "land fitting" is an operation process of disposing ceiling pipes and the like. In this operation process, the operation is performed by attaching pipes above the ceiling hull block, in other words, with the up-down direction reversed.

Fig. 26 is a twentieth diagram illustrating an example of a fitting drawing image according to an embodiment of the present invention.

Fig. 26 illustrates a fitting drawing corresponding to an operation process before land fitting. In this operation stage, a pipe unit that is a plurality of pipes combined is assembled on the ground. Then, the assembled pipe unit is disposed in the hull block in the operation process of land fitting illustrated as an example in Fig. 25, for example. As illustrated in Figs. 24 to 26, the image generation unit 13 displays the intermediate product in the posture in which the intermediate product is assembled. According to the display system 10, the operator can check the intermediate product in the same state as the state in which the operator actually performs the operation, in the three-dimensional image.

Next, a three-dimensional hull drawing used in an operation of assembling a ship structure will be described.

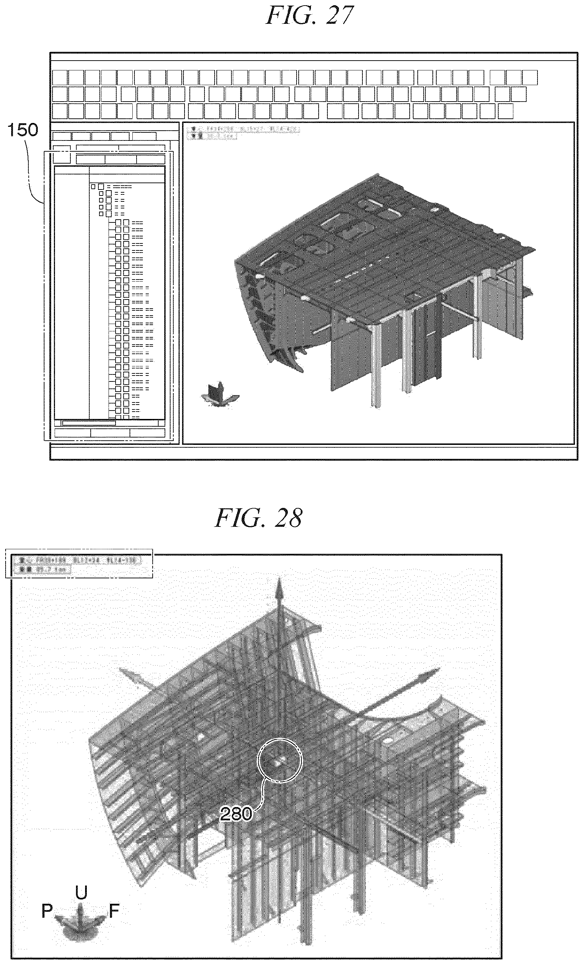

Fig. 27 is a first diagram illustrating an example of a hull drawing image according to an embodiment of the present invention.

In the three-dimensional image of the hull drawing, an assembly tree of hull components is displayed in a region 270. Once the operator selects a hull block (a group of hull components) from the assembly tree, the control unit 12 extracts hull components configuring the hull block selected from the storage unit 17. The image generation unit 13 generates a three-dimensional image of hull block in which the extracted hull components are assembled on the basis of a predetermined assembly method. Alternatively, once the operator selects a certain assembly process from the assembly tree, a three-dimensional image of the hull block as a result of assembly in the assembly process is generated.

Fig. 28 is a second diagram illustrating an example of a hull drawing image according to an embodiment of the present invention.

Fig. 28 illustrates a display example of a weight and gravity center coordinates of the hull block designated in the assembly tree. For example, the image generation unit 13 may display the weight and the gravity center coordinate information (coordinate information in the ship body coordinate system) at an upper left corner in the three-dimensional image display region. The gravity center position of the hull block may be displayed with a different color (gravity center position 280). Coordinate axes of the ship body coordinate system with the gravity center position located at the origin may be displayed. Since the hull block is mounted by being lifted with a crane or the like, the weight and the gravity center are important information. Display as in Fig. 28 is convenient for transporting the hull block or the like.

The storage unit 17 stores the weight and the gravity center of each of hull components configuring the hull block, and the control unit 12 uses this information to calculate the gravity center and the weight of the hull block.

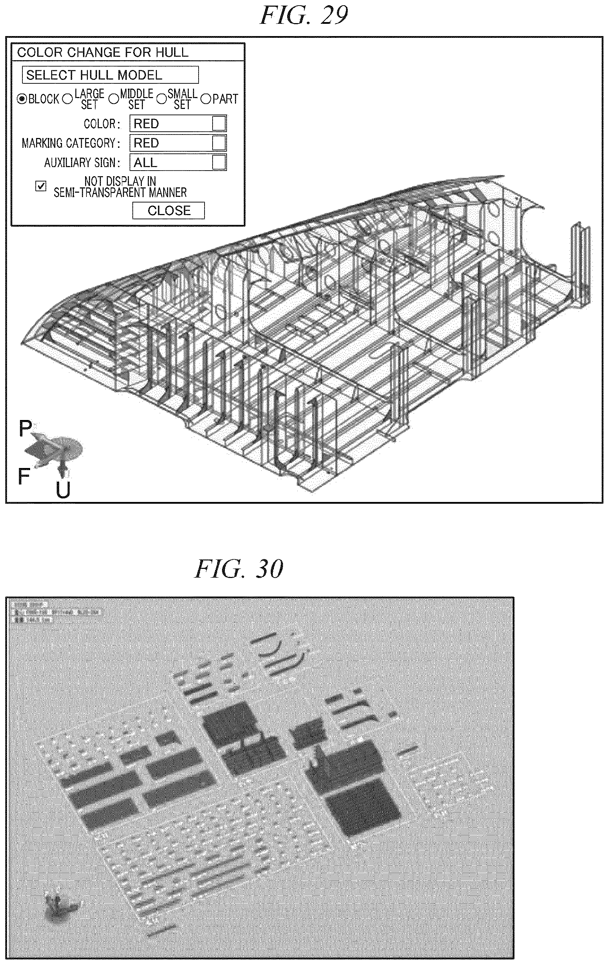

Fig. 29 is a third diagram illustrating an example of a hull drawing image according to an embodiment of the present invention.

Fig. 29 illustrates a display/non-display setting in units of designated hull blocks or hull components and a colored display example using designated colors. In the upper left part, an example of an emphasized display setting dialog depending on marking categories of hull components (components categories) or component types is shown. For example, the three-dimensional image generation unit generates an image in which components of the category set in the dialog are displayed with a designated color.

Fig. 30 is a fourth diagram illustrating an example of a hull drawing image according to an embodiment of the present invention.

Fig. 30 illustrates a display example in which a hull block and components in the previous process are displayed in an aligned manner in the designated assembly process. If the operator presses one predetermined instruction button such as the instruction button 3a, for example, the image generation unit 13 displays the hull block assembled in and before the previous process in an assembled state and displays hull components to be used in the current assembly process one by one. Through such display, it is possible to recognize necessary articles.

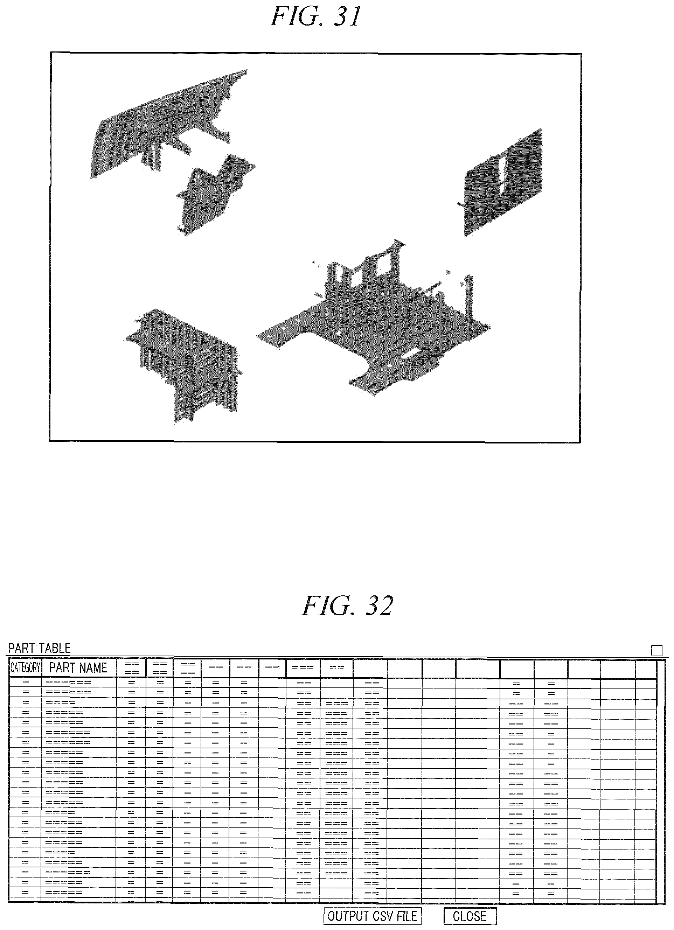

Fig. 31 is a fifth diagram illustrating an example of a hull drawing image according to an embodiment of the present invention.

Fig. 31 illustrates a display example in which a hull block to be assembled in a designated assembly process is displayed separately in units of hull blocks (sub-assemblies) assembled in the previous process. If the operator presses one predetermined instruction button such as the instruction button 3a, for example, the image generation unit 13 may perform display in which the sub-assemblies are separated radially around the gravity center of the hull block in the selected assembly process at the center. Alternatively, the operator may perform an operation of separating each of the sub-assemblies in an arbitrary direction, and the image generation unit 13 may generate an image on the basis of this operation. By enabling such display, the operator can use the display for reviewing the assembly or for providing assembly instructions.

Fig. 32 is a sixth diagram illustrating an example of a hull drawing image according to an embodiment of the present invention.

Fig. 32 illustrates a component list of hull components to be assembled in a designated assembly process, iron out outfitting parts, scaffolds, eye plates, and the like. The storage unit 17 records such information, and if the operator presses one predetermined instruction button such as the instruction button 3a, for example, the image generation unit 13 may display the component list illustrated as an example in Fig. 32.

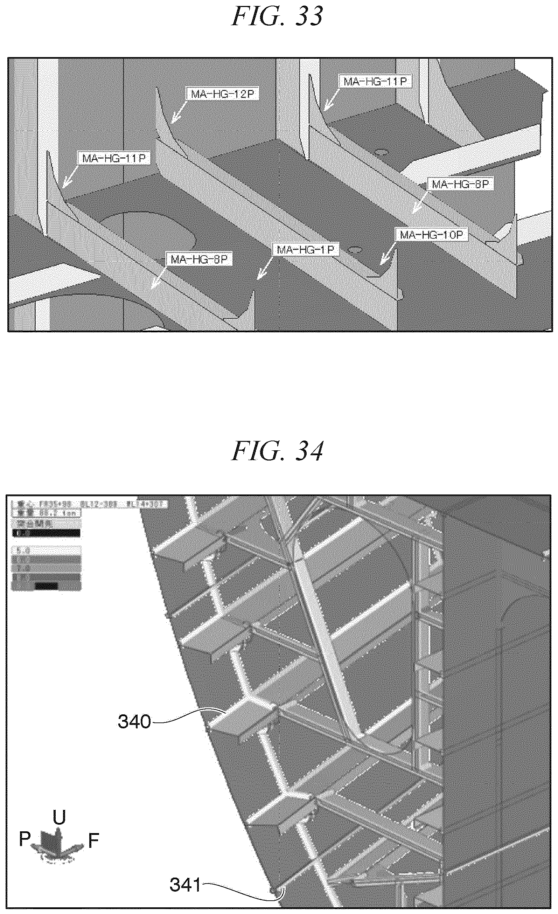

Fig. 33 is a seventh diagram illustrating an example of a hull drawing image according to an embodiment of the present invention.

Fig. 33 illustrates a display example in which component names of hull components are displayed. "MA-HG-11P" and the like illustrated in the drawing are component names. The storage unit 17 records design information such as names and management numbers in an associated manner with IDs of the hull components. The control unit 12 reads this information from the storage unit 17, and the image generation unit 13 generates an image that displays component names in front of the hull components. Even if the user changes the viewing direction or the like, the image generation unit 13 still generates a three-dimensional image that displays the names of the hull components on the side in front, similarly to the description for the example of the fitting drawing. In this manner, the user can always recognize the names of the hull components. The names of the hull components may be displayed only when the operator presses one predetermined instruction button such as the instruction button 3a.

Fig. 34 is an eighth diagram illustrating an example of a hull drawing image according to an embodiment of the present invention.

Fig. 34 illustrates a display example in which the image generation unit 13 displays welded locations with colors changed depending on welding leg lengths.

The storage unit 17 records three-dimensional position information of the welded locations, welding leg lengths, and processes for welding in an associated manner. The image generation unit 13 displays the welded locations by applying colors in accordance with the welding leg lengths thereto. For example, the leg length of the welded location 340 is 5 mm, and the leg length of the welded location 341 is 6 mm. The welded locations in the selected hull block may be displayed only when the operator presses one predetermined instruction button such as the instruction button 3a.

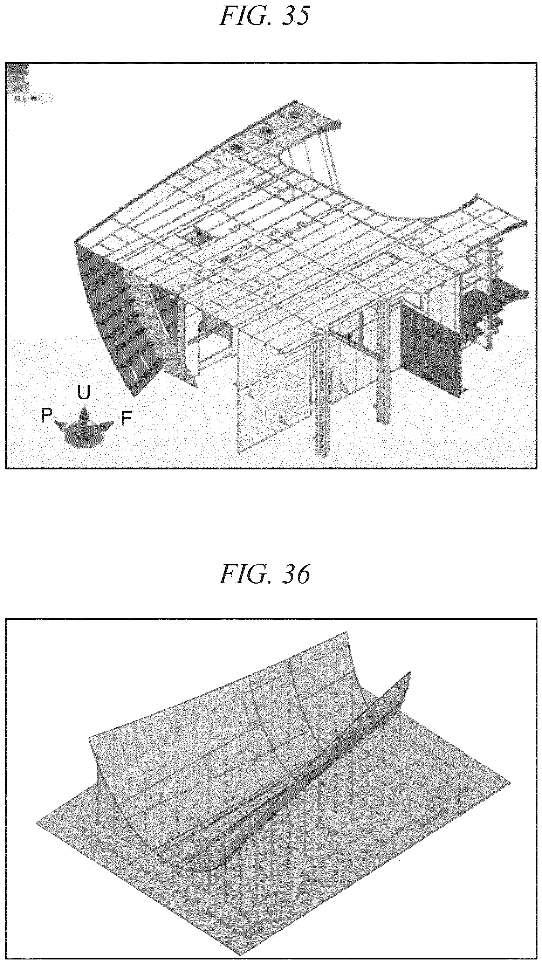

Fig. 35 is a ninth diagram illustrating an example of a hull drawing image according to an embodiment of the present invention.

Fig. 35 illustrates a display example in which the image generation unit 13 displays the hull components with colors changed in accordance with the plate thicknesses, materials, edge types, and the like. The image generation unit 13 may display only a plate thickness or a material designated by the operator, for example, with a color.

Fig. 36 is a tenth diagram illustrating an example of a hull drawing image according to an embodiment of the present invention.

Fig. 36 illustrates a display example of a three-dimensional image of the image generation unit 13 in which an assembly block with a curved shape is placed on an assembly surface plate jig. According to the display system 10, it is also possible to display how the hull block that cannot be placed directly on the ground due to curving is secured to a designated jig in a three-dimensional image.

According to the hull drawing images illustrated in Figs. 27 to 36, the operator can acquire design information from the three-dimensional drawings, it thus becomes easier to check the hull blocks and the shapes of the hull components and how the hull components are to be assembled, and it is possible to reduce the number of processes for reading the drawings. It is possible to prevent the hull components or the iron out outfitting parts from being erroneously assembled.

Next, scaffold drawings will be described.

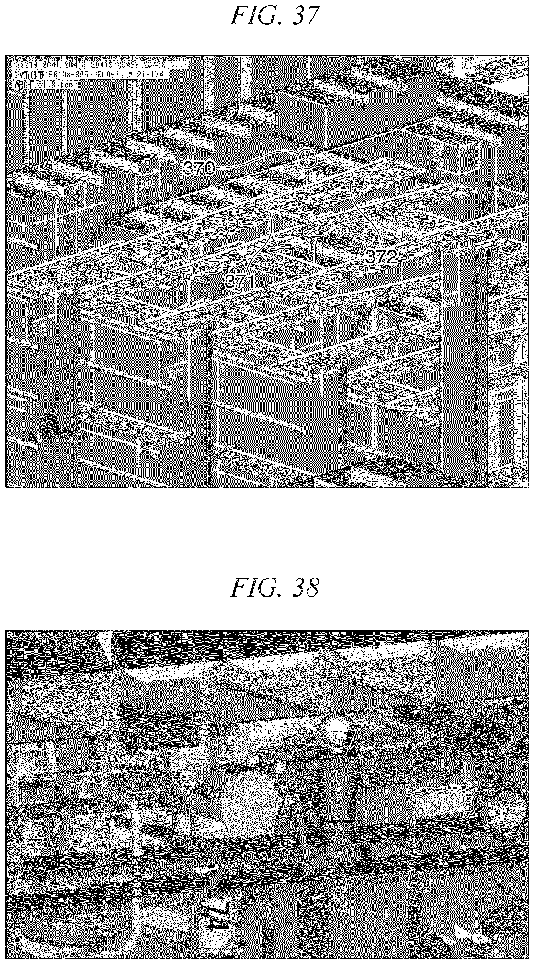

Fig. 37 is a first diagram illustrating an example of a scaffold drawing image according to an embodiment of the present invention. Fig. 38 is a second diagram illustrating an example of a scaffold drawing image according to an embodiment of the present invention.

Fig. 37 illustrates a scaffold piece 370, scaffold attachment components 371, and a scaffold plate 372. The storage unit 17 records three-dimensional images of the scaffold piece 370, the scaffold attachment components 371, and the scaffold plate 372. The operator installs the scaffold attachment components 371 by securing the scaffold piece 370 to a desired position in the ship in the three-dimensional image through a predetermined operation. The operator installs a plurality of scaffold attachment components 371. Then, the operator can temporarily provide a scaffold in the three-dimensional image by bridging the scaffold plate 372 over the plurality of scaffold attachment components 371. In this manner, it is possible to review the position of the scaffold. Fig. 38 illustrates how a three-dimensional human model performs an operation on the scaffold plate. The display system 10 allows operation simulation using the scaffold with a three-dimensional human model. In this manner, it is possible to review whether the position of the scaffold is appropriate in advance. It is possible to check an interference between the scaffold and the hull components/fitting components, to review a scaffold with satisfactory operability, and thereby to reduce an unnecessary scaffold. By providing such scaffold drawings, operability of the person who temporarily provides the scaffold is improved.

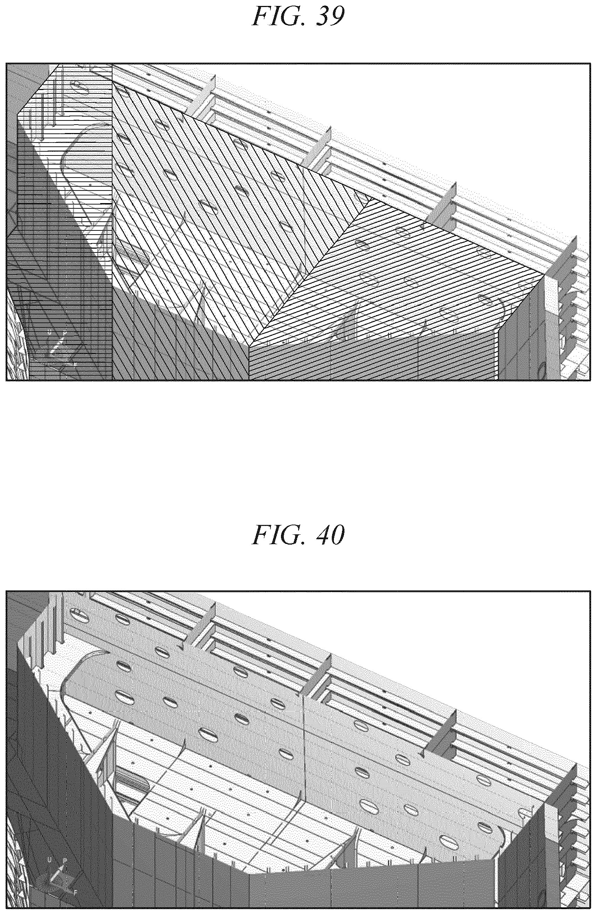

Fig. 39 is a first diagram illustrating an example of a painting drawing image according to an embodiment of the present invention.

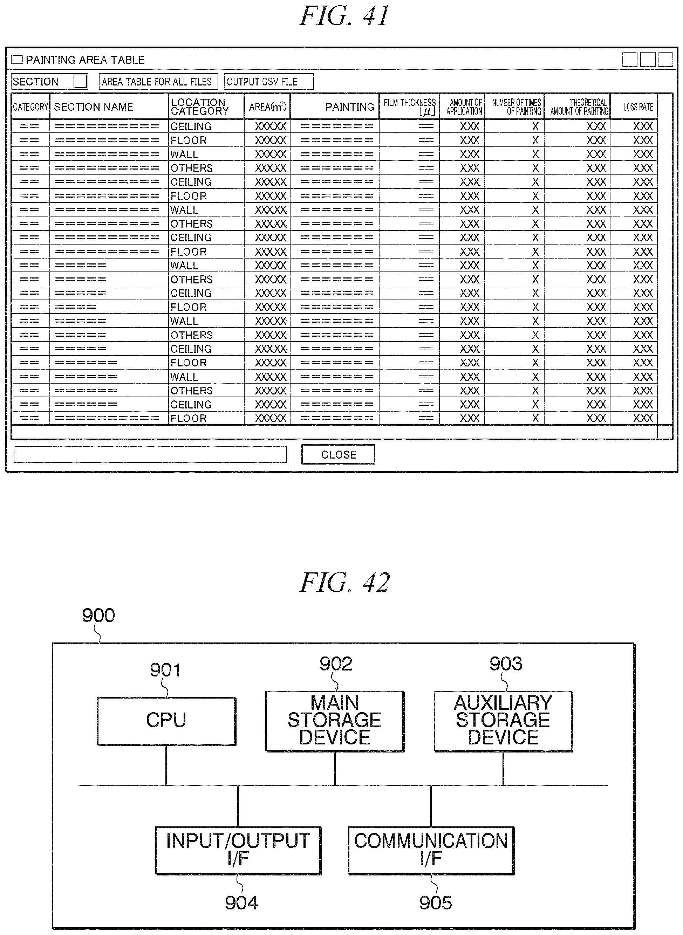

Fig. 39 illustrates an example of an image that displays a hull block by coloring each section. The section means classification of a hull block sectioned by a designer in accordance with a function, a role, or the like. The storage unit 17 records a three-dimensional model of the section, and the three-dimensional model defines which section corresponds to which part of the hull. What color is to be assigned to each section or the like is recorded (Fig. 41). Fig. 41 illustrates an example of a painting setting table according to an embodiment of the present invention. As illustrated in the drawing, the setting table has items such as an area and a location of each section, the type of painting, the amount of application, the number of times of painting, and the like. If the user presses one predetermined instruction button such as the instruction button 3 for providing an instruction for displaying a section in a state in which a certain hull block is displayed, for example, the control unit 12 reads a three-dimensional model of the section and the setting table, and the image generation unit 13 generates an image that displays a three-dimensional model of the colored section in an overlapping manner on the hull block. Once the user presses a predetermined instruction button, the list of setting items illustrated as an example in Fig. 41 may be displayed.

Fig. 40 is a second diagram illustrating an example of a painting drawing image according to an embodiment of the present invention.

Fig. 40 illustrates an example of an image in which a paint with a color that is to be actually painted is applied to the surface of the hull block. For example, the storage unit 17 records a setting table that defines types and colors of paint, how many times the paint is to be applied, the painting area, and the like for each of the hull components that are similar to those in Fig. 41. The number of colors to be applied to one hull component is not limited to one. For example, there is a case in which setting information that a half of a component is to be colored with a red color while the rest half of it is to be colored with a blue color is registered in the setting table. There is also a case in which one hull component is painted in several layers. For example, the user presses one predetermined instruction button such as the instruction button 3a for providing an instruction for displaying an actual painted color in a state in which a certain hull block is displayed. Then, the control unit 12 reads the setting table for the hull component and provides an instruction regarding the painting color for the hull component to the image generation unit 13. The image generation unit 13 generates a three-dimensional image in which each hull component is colored. In a case in which a component is painted in several layers, an image that displays a painted color for a layer designated by the user may be generated.

According to the painting drawings illustrated as examples in Figs. 39 and 40, the user can check the three-dimensional images of a ship colored with the colors of the sections or colors that are actually to be painted. It is possible to recognize how much paint is to be needed for actual painting from the information of the painting area.

As described above, it is possible to display a three-dimensional image of part or all of a ship along with various kinds of design information according to the embodiment. It is possible to selectively display only necessary hull components or outfitting parts. It is possible to display attachment states of a hull block or outfitting parts in accordance with progress or for each operation process. These functions enable drawings that are to be used for various applications such as design, manufacturing, construction, management, and inspection in relation to a ship to be displayed as three-dimensional images.

Fig. 42 is a diagram illustrating an example of a hardware configuration of the three-dimensional drawing display system according to an embodiment of the present invention.

A computer 900 is a personal computer (PC) or a server terminal device, for example, provided with a CPU 901, a main storage device 902, an auxiliary storage device 903, an input/output interface 904, and a communication interface 905. The aforementioned three-dimensional drawing display system 10 is mounted in the computer 900. Also, the aforementioned operations of each processing unit are stored in in the form of a program in the auxiliary storage device 903. The CPU 901 reads the program from the auxiliary storage device 903, develops the program on the main storage device 902, and executes the aforementioned processing in accordance with the program. The CPU 901 secures a storage region corresponding to the storage unit 17 in the main storage device 902 in accordance with the program. The CPU 901 secures a storage region for storing data that is being processed in the auxiliary storage device 903 in accordance with the program.

In at least one of embodiments, the auxiliary storage device 903 is an example of non-transitory tangible media. Other examples of the non-transitory tangible media include a magnetic disk connected via the input/output interface 904, a magneto-optical disk, a CD-ROM, a DVD-ROM, and a semiconductor memory. In a case in which the program is distributed to the computer 900 through a communication line, the computer 900 that has received the distribution may develop the program on the main storage device 902 and execute the aforementioned processing. The program may be adapted to realize part of the aforementioned functions. Further, the program may be a so-called differential file (differential program) that realizes the aforementioned functions in combination with another program that has already been stored in the auxiliary storage device 903.

In addition, it is possible to appropriately replace components in the aforementioned embodiments with known components without departing from the gist of the present invention. The technical scope of the present invention is not limited to the aforementioned embodiments, and various modifications can be added without departing from the gist of the present invention.

### [Industrial Applicability]

According to the aforementioned three-dimensional drawing display system, and the three-dimensional drawing display method and program, it is possible to display various drawings related to manufacturing of a ship in a three-dimensional manner.

### [Reference Signs List]

- 10: Three-dimensional drawing display system
- 1A to 1C: Terminal device
- 11: Input receiving unit
- 12: Control unit
- 13: Image generation unit
- 14: Output unit
- 15: Other-application cooperation unit
- 16: Communication unit
- 17: Storage unit

## Claims

1. A three-dimensional drawing display system comprising:
a storage unit configured to store three-dimensional data of components that configure a ship, design information of the components, and design information of the ship; and
an image generation unit configured to generate a three-dimensional image that displays the ship as an assembly of the components based on the design information of the ship along with a ship body coordinate system.

2. The three-dimensional drawing display system according to claim 1, wherein the image generation unit generates a three-dimensional image that displays identification information of each of the components on a side in front.

3. The three-dimensional drawing display system according to claim 1 or 2, wherein the image generation unit generates a three-dimensional image of the ship such that display and non-display of the components are switched depending on types of the components.

4. The three-dimensional drawing display system according to any one of claims 1 to 3, wherein the image generation unit generates, on a basis of designation of one unit of operations in processes of manufacturing the ship, a three-dimensional image of part of the ship configured of the components used in the unit of operations.

5. The three-dimensional drawing display system according to any one of claims 1 to 4, wherein the image generation unit generates a three-dimensional image that displays the components in different forms in accordance with operation progresses in the processes of manufacturing the ship.

6. The three-dimensional drawing display system according to claim 5, wherein the image generation unit generates, for each operation process configuring the processes of manufacturing the ship, a three-dimensional image that displays the components used in the operation process in different forms.

7. The three-dimensional drawing display system according to any one of claims 1 to 6, wherein the image generation unit generates a three-dimensional image that displays, in a first predetermined form, the components assembled in the operation process that has already been completed, displays, in a second predetermined form, the components related to the current operation process, and does not display the components used in the following operation processes, in operation processes of attaching the components in the processes of manufacturing the ship.

8. The three-dimensional drawing display system according to any one of claims 1 to 7, wherein the image generation unit generates a three-dimensional image that displays only a group of hull components selected from among the components along with a gravity center position of part or all of the ship configured of the hull components.

9. The three-dimensional drawing display system according to any one of claims 1 to 8, wherein the image generation unit generates a three-dimensional image in which a plurality of hull components or a group of hull components to be assembled in a designated assembly operation process in the assembly operation processes of hull components configuring the processes of manufacturing the ship are aligned, and for hull components, the assembly of which has been completed at the time of completion of an assembly operation process previous to the assembly operation process designated in the three-dimensional image, displays a three-dimensional image of a group of the hull components after the assembly.

10. The three-dimensional drawing display system according to any one of claims 1 to 9, wherein the image generation unit generates a three-dimensional image in which a group of hull components to be assembled as a result of the designated assembly operation process in the assembly operation processes of the hull components configuring the processes of manufacturing the ship is arbitrarily split.

11. The three-dimensional drawing display system according to any one of claims 1 to 10, wherein the image generation unit generates a three-dimensional image in which a scaffold is placed inside the ship, on the basis of an instruction from a user.

12. The three-dimensional drawing display system according to any one of claims 1 to 11, wherein the image generation unit generates, in a switching manner, an image that displays a three dimensional image related to the ship by applying different colors to sections that are regions defined on the basis of a predetermined design intention and an image that displays the three-dimensional image related to the ship by applying colors that are to be applied when the manufacturing of the ship is completed.

13. A three-dimensional drawing display method comprising:
acquiring three-dimensional data of components that configure a ship, design information of the components, and design information of the ship; and
generating a three-dimensional image that displays a three-dimensional image of the ship as an assembly of the components on the basis of the design information of the ship along with a ship body coordinate system.

14. A program that causes a computer to function as:
means for acquiring three-dimensional data of components that configure a ship, design information of the components, and design information of the ship; and
means for generating a three-dimensional image that displays a three-dimensional image of the ship as an assembly of the components on the basis of the design information of the ship along with a ship body coordinate system.
